## Europäisches Patentamt

## European Patent Office

## Office européen des brevets

(11) Publication number: **0 187 172**
**B1**

# EUROPEAN PATENT SPECIFICATION

(45) Date of publication of patent specification: **07.03.90**

(51) Int. Cl.⁵: **G 01 K 1/14**

(21) Application number: **84201951.5**

(22) Date of filing: **28.12.84**

(54) **Instrumented unit for measuring temperatures and heat flux in evaporative walls of steam generators.**

(43) Date of publication of application:
**16.07.86 Bulletin 86/29**

(45) Publication of the grant of the patent:
**07.03.90 Bulletin 90/10**

(84) Designated Contracting States:
**AT BE CH DE FR GB LI LU NL SE**

(56) References cited:
**DE-U-8 310 279**
**GB-A-1 143 108**

**POWER, vol. 103, January 1963, pages 54-55,
New York, US; "Improved thermocouple
techniques"**

(73) Proprietor: **CISE- Centro Informazioni Studi
Esperienze S.p.A.
Via Carducci, 14
I-20123 Milano (IT)**

(72) Inventor: **Arisi, Sergio
Viale Lombardia 32
I-20131 Milan (IT)**

(74) Representative: **Appoloni, Romano et al
ING. BARZANO' & ZANARDO MILANO S.p.A. Via
Borgonuovo 10
I-20121 Milano (IT)**

## Description

This invention relates to a unit for measuring the temperature at various parts of a heat exchanger, particularly of an evaporative wall of a steam generator.

Experts of the art are familiar with the particular problems deriving from inefficiency or poor operation inside steam generators, in particular on the evaporative walls, in the case of installations such as thermoelectric power plant.

It is well known that heat transfer between the products of combustion and evaporating water is influenced to a considerable degree by the extent of incrustation and deposits which can occur both on the inside and outside of evaporative tubes.

These latter can thus be found to operate at a temperature much higher than the design temperature.

It would therefore be useful to be able to measure abnormal operating conditions by means of temperature sensors, in order to prevent faults arising or provide warning thereof. The problem is particularly felt when the fuel used is coal. In this case, the large quantities of ash produced by the combustion can lead to both heavy incrustation and intense erosion on the heat transfer surfaces.

With reference to the cross-section through an evaporative tube, it is convenient to measure a first temperature in proximity to the surface most exposed to the products of combustion, a second temperature in the same radial position as the preceding but in proximity to the surface lapped by the feed water, and a third temperature in a position diametrically opposite the preceding, where the heat flux is practically absent, and which represents the feed water temperature with good approximation.

In this respect, knowing the first two temperatures and the distance between the relative measurement points, the heat flux can be calculated.

Formation of incrustation on the inner wall of the tube is indicated by the variation in the difference between the second and third temperature, whereas abnormal increases in the first temperature indicate erosion of the walls exposed to the products of combustion. Precisely because of these considerations, evaporative tubes have been constructed in which the measurement thermocouples are positioned in surface slots provided transversely on the tube, and are protected by angle sections or suitable sheaths. The ends of said thermocouples are inserted into bores provided in the aforesaid measurement zones.

A further construction comprises sliding and positioning seats for the thermocouples, formed by providing a series of bores essentially along a set of chords one following the other in a section of the tube.

By welding the ends of said bores, a seat becomes created for the thermocouple inside the tube thickness, and formed by the combination of a number of rectilinear portions equal to the number of bores formed.

This construction presents particular problems in forming the various welds, and in positioning the thermocouples, which are difficult if not impossible to replace. In addition, there are substantial sealing problems because the entire aforesaid set of bores and welds must be such as to ensure that there is no leakage of fluid from the tube, and must therefore be executed in an absolutely perfect and accurate manner. Constructions are also known (Power, Vol. 103, January 1963, pages 54 to 55, New York, US; "Improved thermocouple techniques") where the thermocouple is positioned in a surface slot provided on the tube and in a series of chordal bores formed in the tube. Problems analogous to the aforesaid problems clearly arise with such constructions.

The object of the present invention is to obviate said drawbacks by allowing thermocouple replacement in the case of faults, a good fluid seal in the case of tube erosion in the instrumented zone, and at the same time an increase in the strength and life of the measurement unit.

This object is attained according to the present invention by a unit for measuring the temperature at various parts of a heat exchanger, particularly of an evaporative wall of a steam generator, composed of a plurality of tubes, comprising thermosensitive devices for sensing the temperature of the tubes at predetermined points of the tubes, each thermosensitive device being inserted in a bore formed in a tube, characterized in that said bore is formed completely within the thickness of the tube wall, its one and only opening being on the outside surface of the tube, and said bore extends along a continuous curvilinear path.

The structural and operational characteristics of the measuring unit according to the invention will be more apparent from the description given hereinafter with reference to the accompanying diagrammatic drawings in which

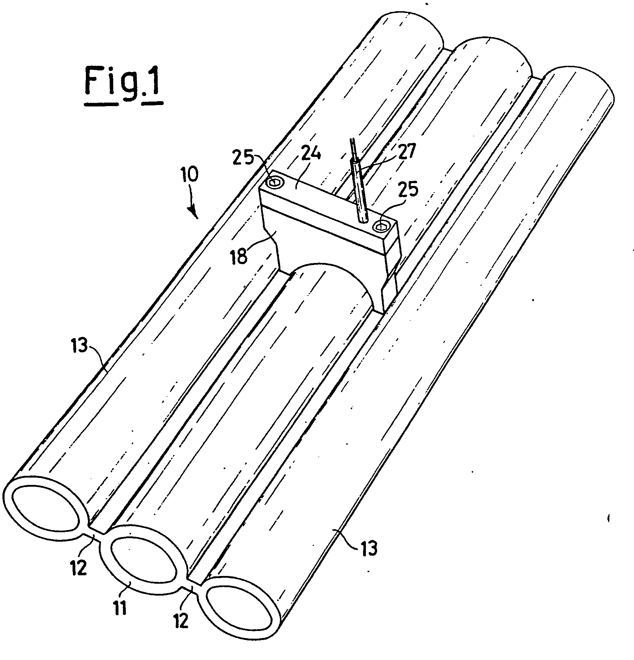

Figure 1 is a perspective view of a measuring unit according to the invention mounted on an evaporative wall sector;

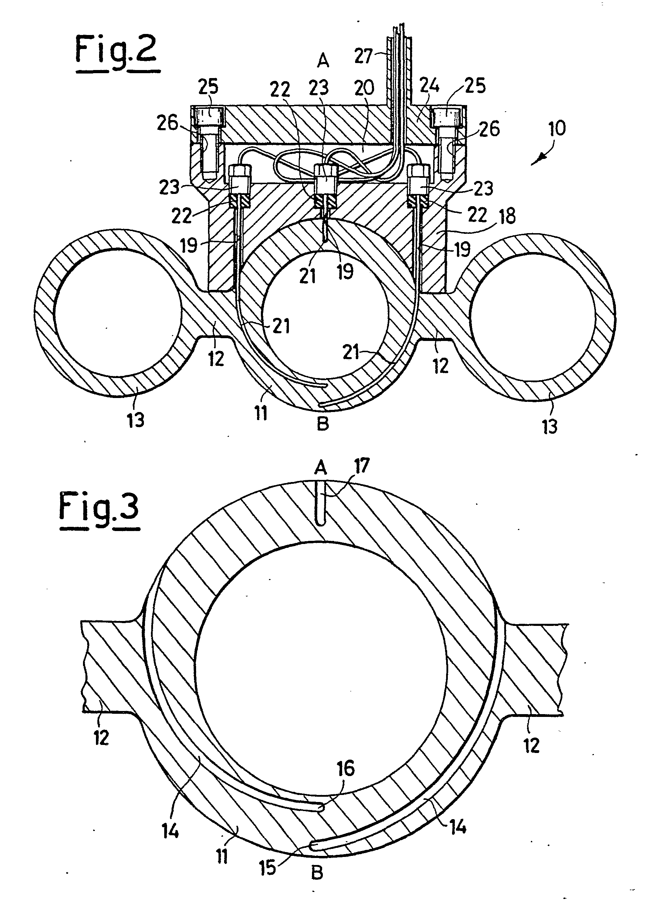

Figure 2 is a partial cross-section through said measuring unit mounted on the evaporative wall sector; and

Figure 3 is a cross-section through the single tube into which the thermocouples are inserted.

With reference to the drawings, an evaporative wall panel or sector 10 of a steam generator (not shown) comprises for example a central tube 11 joined by diaphragms 12 to two side tubes 13 of smaller wall thickness than the central tube 11, but of the same inner diameter.

In one transverse section, there are formed by electroerosion in the walls of said central tube 11 a pair of arcuate cavities 14, which extend from a zone above the diaphragms 12 on the side A at the outer wall of the generator, to the points 15 and 16 disposed on the same radius. The first point 15 is in proximity to the surface exposed to the products of combustion (side B) while the other point 16 is in proximity to the inner surface of the tube 11 lapped by the feed water.

In a position diametrically opposite the two preceding measurement points 15 and 16 there is provided a radially directed bore 17 which terminates in proximity to the inner wall of the tube.

A saddle-shaped box member 18 is disposed and welded on the central tube 11 in that zone comprising the two cavities 14 and the bore 17, so that these latter are in positions corresponding with three bores 19 provided in said member 18.

The other end of the bores 19, which is considerably widened and threaded, emerges into a seat 20. Three thermocouples 21 are inserted into the cavities 14 and bore 17, passing through the bores 19, and carry seal gaskets 22, for example of lamellar graphite, which act on the protection sheaths and are kept in their seat by pressure bushes 23 screwed therein. A cover 24, provided with locking screws 25 inserted into threaded bores 26 of the member 18, upperly closes the seat 20.

A protection tube 27 is fixed on to the cover 24 in a position corresponding with a relative bore, and enables the thermocouples 21 to be connected to the reading instrument (not shown). A measuring unit constructed in this manner enables wall temperatures to be monitored and thermal flux to be determined during operation.

The arcuate cavities 14 are obtained by electroerosion using a suitable device which moves the electrode along circumferential arcs, such as to obtain a seat for the thermocouple 21 which is particularly precise. The form of said cavities 14 allows easy positioning of the thermocouples 21, and simple replacement of the thermocouples if faults arise. The special seal gaskets 22 acting on the thermocouples 21 protect the instrumented zone should fluid leak due to erosion of the wall of the evaporative tube 11.

The described measuring unit is robust and easy to mount, including on plants in operation during maintenance periods.

A panel 10 carrying the described measuring unit can be easily positioned on the plant, and this can be done with considerable rapidity because the tube welds can be made without special precautions, as they are in zones fairly distant from the measuring unit.

## Claims

1. A unit for measuring the temperature at various parts of a heat exchanger, particularly of an evaporative wall (10) of a steam generator, composed of a plurality of tubes (11, 13), comprising thermosensitive devices (21) for sensing the temperature of the tubes (11) at predetermined points of the tubes (11), each thermosensitive device (21) being inserted in a bore (14) formed in a tube (11), characterized in that said bore (14) is formed completely within the thickness of the tube wall, its one and only opening being on the outside surface of the tube (11), and said bore (14) extends along a continuous curvilinear path.

2. Measuring unit as claimed in claim 1, wherein in one cross-section of one (11) of said tubes two of said bores (14) are provided which extend from their opening in a zone of the tube (11) to two respective terminal points (15, 16) disposed on the same radius within the thickness of the tube wall, one terminal point (15) being proximal to the outer surface of the tube (11), the other terminal point (16) being proximal to the inner surface of the tube (11), the thermosensitive devices (21) inserted in said two bores sensing the temperature at said terminal points (15, 16).

3. Measuring unit as claimed in claim 2, wherein in said cross-section of one (11) of said tubes a further radially directed bore (17) is provided, which is disposed in a position diametrically opposite to the position of said terminal points (15, 16) and extends from an its opening in said zone of the tube (11) to a further terminal point proximal to the inner surface of the tube (11), a thermosensitive device (21) inserted in said further bore (17) sensing the temperature at said further terminal point.

4. Measuring unit as claimed in claim 2 or 3, wherein a member (18) is provided, which is fixed to said tube (11) in said zone of the tube and which contains and supports in a tight manner said thermosensitive devices (21) inserted in said bores through their openings.

5. Measuring unit as claimed in claim 4, wherein said member (18) is provided with bores (19), each of which communicates at one end with one respective bore of said bores formed in the tube (11) and at the other end with a seat (20) formed in said member (18) and covered by a removable cover (24), said thermosensitive devices (21) being supported in said bores (19) of said member (18).

6. Measuring unit as claimed in claim 5, wherein each thermosensitive device (21) carries a seal gasket (22) which acts on a protection sheath of the thermosensitive device (21) and is kept in place by a pressure bush (23) screwed in a respective bore (19) of said member (18).

7. Measuring unit as claimed in one of the claims 4, 5, 6, wherein a protection tube (27) extends from said member (18), for enabling the thermosensitive devices (21) to be connected to a reading instrument.

8. Measuring unit as claimed in one of the claims 4, 5, 6, 7, wherein said member (18) has a saddle shape.

9. Measuring unit according to one of the preceding claims, wherein said continuous curvilinear path is a path of constant radius.

10. Measuring unit according to one of the preceding claims, wherein said bores (14) which extend along a continuous curvilinear path are obtained by electroerosion.

## Patentansprüche

1. Vorrichtung zur Messung der Temperatur an verschiedenen Stellen eines Wärmetauschers, insbesondere einer Verdampferwand (10) eines Dampferzeugers, der aus einer Mehrzahl von Rohren (11, 13) zusammengesetzt ist und an vorbestimmten Stellen der Rohre (11) Temperaturfühler (21) zum Abfühlen der Temperatur der Rohre (11) aufweist, wobei jeder Temperaturfühler (21) in eine in einem Rohr (11) ausgebildete Bohrung (14) eingesetzt ist, dadurch gekennzeichnet, daß die Bohrung (14) vollständig innerhalb der Rohrwandstärke ausgebildet ist und ihre eine une einzige Öffnung an der Außenseite des Rohres (11) liegt und daß sich die Bohrung (14) entlang eines kontinuierlichen gekrümmten Weges erstreckt.

2. Meßvorrichtung nach Anspruch 1, bei welcher in einem Querschnitt eines (11) der Rohre zwei dieser Bohrungen (14) vorgesehen sind, die sich von einer Öffnung in einem Bereich des Rohres (11) zu zwei zugehörigen auf ein und derselben Radiallinie innerhalb der Rohrwandstärke befindliche Endpunkten (15, 16) erstrecken, wobei ein Endpunkt (15) nahe bei der Außenseite des Rohres (11) und der andere Endpunkt (16) nahe bei der Innenseite des Rohres liegt und die in den beiden Bohrungen eingesetzten Temperaturfühler (21) die Temperatur an den Endpunkten abfühlen.

3. Meßvorrichtung nach Anspruch 2, bei welcher in dem Querschnitt des einen (11) der Rohre eine weitere, radial verlaufende Bohrung (17) vorgesehen ist, die an einer den Endpunkten (15, 16) diametral gegenüberliegenden Stelle angeordnet ist und sich von ihrer Öffnung in dem genannten Bereich des Rohres (11) zu einem weiteren Endpunkt nahe bei der Innenseite des Rohres (11) erstreckt, wobei in der weiteren Bohrung (17) ein Temperaturfühler (21) zum Abfühlen der Temperatur an dem weiteren Endpunkt eingesetzt ist.

4. Meßvorrichtung nach Anspruch 2 oder 3, bei welcher ein Bauteil (18) vorgesehen ist, der in dem Bereich des Rohres an dem Rohr (11) befestigt ist und der die in den Bohrungen durch deren Öffnungen eingesetzten Temperaturfühler (21) aufnimmt und hält.

5. Meßvorrichtung nach Anspruch 4, bei welcher der Bauteil (18) Bohrungen (19) aufweist, deren jede an einem Ende mit einer zugeordneten der im Rohr (11) ausgebildeten Bohrungen und am anderen Ende mit einem in dem Bauteil (18) ausgebildeten und durch einen anhehmbaren Deckel (24) abdeckbaren Sitz (20) in Verbindung steht, wobei die Temperaturfühler (21) in den Bohrungen (19) des Bauteiles (18) gehalten sind.

6. Meßvorrichtung nach Anspruch 5, bei welcher jeder Temperaturfühler (21) einen Dichtungsring (22) trägt, der mit einem Schutzmantel des Temperaturfühlers (21) zusammenwirkt und durch eine in eine zugeordnete Bohrung (19) des Bauteiles (18) eingeschraubte Druckhülse (23) an Ort und Stelle gehalten ist.

7. Meßvorrichtung nach Anspruch 4, 5 oder 6, bei welcher vom Bauteil (18) ein Schutzrohr zur Ermöglichung des Anschlusses des Temperaturfühlers (21) an ein Anzeigeinstrument absteht.

8. Meßvorrichtung nach Anspruch 4, 5, 6 oder 7, bei welcher der Bauteil (18) Sattelform aufweist.

9. Meßvorrichtung nach einem der vorangehenden Ansprüche, bei welcher der kontinuierliche gekrümmte Weg ein Weg mit konstantem Radius ist.

10. Meßvorrichtung nach einem der vorangehenden Ansprüche, bei welcher die sich entlang eines kontinuierlichen gekrümmten Weges erstreckenden Bohrungen (14) durch Elektroerosion hergestellt sind.

**Revendications**

1. Unité pour mesurer la température en diverses parties d'un échangeur de chaleur, et en particulier la température d'une paroi d'évaporation (10) d'un générateur de vapeur constitué d'une pluralité de tubes (11, 13), l'unité comprenant des dispositifs thermosensibles (21) pour détecter la température des tubes (11) en des points prédéterminés des tubes (11), chaque dispositif thermosensible (21) étant inséré dans un trou (14) formé dans un tube (11), caractérisée en ce que le trou (14) est formé entièrement dans· l'épaisseur de la paroi du tube, son unique ouverture se trouvant sur la surface extérieure du tube (11), et le trou (14) s'étend selon un parcours curvilinéaire continu.

2. Unité de mesure selon la revendication 1, dans laquelle il est prévu, dans une section transversale d'un (11) des tubes, deux trous (14) qui s'étendent depuis leur ouverture dans une zone du tube (11) jusqu'à deux points terminaux respectifs (15, 16) disposés sur le même rayon dans l'épaisseur de la paroi du tube, un point terminal (15) étant proche de la surface extérieure du tube (11), l'autre point terminal (16) étant proche de la surface intérieure du tube (11), et les dispositifs thermosensibles (21) insérés dans les deux trous détectant la température aux points terminaux (15, 16).

3. Unité de mesure selon la revendication 2, dans laquelle il est prévu, dans la section transversale précitée d'un (11) des tubes, un trou supplémentaire (17) orienté radialement, qui est disposé à une position diamétralement opposée à la position des points terminaux (15, 16), et qui s'étend depuis son ouverture dans ladite zone du tube (11) jusqu'à un point terminal supplémentaire proche de la surface intérieure du tube (11), un dispositif thermosensible (21) inséré dans le trou supplémentaire (17) détectant la température à ce point terminal supplémentaire.

4. Unité de mesure selon la revendication 2 ou 3, dans laquelle il est prévu un élément (18) qui est fixé sur le tube (11) dans ladite zone du tube, et qui contient et supporte d'une manière ajustée les dispositifs thermosensibles (21) insérés dans les trous par les ouvertures de ce dernier.

5. Unité de mesure selon la revendication 4, dans laquelle l'élément (18) est pourvu de trous (19) qui communiquent chacun, à une extrémité, avec un trou respectif parmi les trous précités formés dans le tube (11), et, à l'autre extrémité, avec un siège (20) formé dans l'élément (18) et recouvert d'un couvercle amovible (24) les dispositifs thermosensibles (21) étant supportés dans ces trous (19) de l'élément (18).

6. Unité de mesure selon la revendication 5, dans laquelle chaque dispositif thermosensible (21) porte une garniture d'étanchéité (22) qui sert de blindage de protection du dispositif thermosensible (21), et qui est maintenue en place par une douille de pression (23) vissée dans un trou respectif (19) de l'élément (18).

7. Unité de mesure selon l'une quelconque des revendications 4, 5, 6, dans laquelle un tube protecteur (27) s'étend à partir de l'élément (18) pour permettre aux dispositifs thermosensibles (21) d'être reliés à un instrument de lecture.

8. Unité de mesure selon l'une quelconque des revendications 4, 5, 6, dans laquelle l'élément (18) a une forme de sabot.

9. Unité de mesure selon l'une quelconque des revendications précédentes, dans laquelle le parcours curvelinéaire continu précité est un parcours de rayon constant.

10. Unité de mesure selon l'une quelconque des revendications précédentes, dans laquelle les trous (14), qui s'étendent selon un parcours curvilinéaire continu, sont obtenus par électro-érosion.

# Fig.1

10

25  24  27

25

18

13

13

12

11

12

# Fig.2

# Fig.3